# EUROPÄISCHE PATENTSCHRIFT

(11) **EP 2 863 496 B1**
(45) Veröffentlichungstag und Bekanntmachung des Hinweises auf die Patenterteilung: **19.07.2017**
(21) Anmeldenummer: 13189226.7
(22) Anmeldetag: 18.10.2013
(51) Int. Cl.: H02B 1/044, H02B 1/14, H02G 5/04, H02B 1/20

(54) **Berührungsschutzsystem für Stromsammelschienen**
Contact protection system for power bus bars
Système de protection contre le contact pour barres omnibus

(43) Veröffentlichungstag der Anmeldung: 22.04.2015
(60) Teilanmeldung: 17175494.8
(73) Patentinhaber: Wöhner GmbH & Co. KG Elektrotechnische Systeme, 96472 Rödental (DE)
(72) Erfinder: Büttner, Alex, 96472 Rödental (DE); Steinberger, Philipp, 96472 Rödental (DE); Masel, Joram, 96317 Kronach (DE); Leistner, Frank, 96465 Neustadt (DE)
(74) Vertreter: Isarpatent

(56) Entgegenhaltungen:
- EP-A1- 2 037 550
- EP-A2- 0 753 916
- EP-A2- 1 206 019
- EP-B1- 0 270 994
- DE-A1- 2 360 260
- DE-U1- 9 104 212
- ES-A1- 2 306 572

## Beschreibung

Die Erfindung betrifft ein Berührungsschutzsystem für Stromsammelschienen, die zur elektrischen Stromversorgung von Schaltgeräten dienen.

Sammelschienen, insbesondere Stromsammelschienen, umfassen eine Anordnung von Stromleitern, die zur Verteilung von elektrischer Energie dienen können. Sammelschienen werden aus Aluminium oder Kupfer gefertigt und sind zur Vereinfachung von Anschluss- und Schaltelementen in der Regel unisoliert. Daher wird herkömmlicherweise der Berührschutz durch ein Gehäuse der Schaltanlage gewährleistet.

Nach Öffnen des Gehäuses bieten herkömmliche Sammelschienen keinen Berührschutz, sodass man Sammelschienensysteme meist nur in Hauptverteilungen vorfindet, bei denen der Zugang durch weitergehende Sicherheitsmaßnahmen auf entsprechend geschulte Elektrofachkräfte beschränkt ist.

An die Stromsammelschienen können eine oder mehrere elektrische Geräte, insbesondere Schaltgeräte, montiert werden. In vielen Fällen sind die zugänglichen Stromsammelschienen in abschließbaren Schaltkästen verlegt, da die Stromsammelschienen selbst keinen Berührungsschutz aufweisen. Nach Öffnen des Schaltschrankes kann eine Fachkraft nach Abschalten des Stromes, der durch die Stromsammelschiene fließt, ein Schaltgerät an die Stromsammelschienen montieren bzw. davon demontieren.

Ein Nachteil dieser herkömmlichen Stromsammelschienensysteme besteht daher darin, dass eine Montage bzw. Demontage von Geräten nur möglich ist, wenn das Stromsammelschienensystem vollständig abgeschaltet wird. Daher ist es bei diesen herkömmlichen Systemen nicht möglich, alle angeschlossenen Geräte kontinuierlich mit Strom zu versorgen, da bei Austausch eines Gerätes die übrigen elektrischen Geräte über das Stromsammelschienensystem aufgrund des notwendigen Abschaltvorganges nicht mehr mit Strom versorgt werden können. Dies stellt insbesondere bei bestimmten Anwendungen, beispielsweise bei Stromversorgungssystemen von Krankenhäusern oder dergleichen, einen erheblichen Nachteil dar, da in vielen Situationen bestimmte elektrische Geräte, beispielsweise medizinische Versorgungsgeräte, stets mit Strom zu versorgen sind und nicht ohne Weiteres von der Stromversorgung abgeschaltet werden können.

Ein weiterer Nachteil von derartigen herkömmlichen Stromsammelschienensystemen besteht darin, dass zur Montage bzw. Demontage eines Schaltgerätes ein Nutzer bzw. eine Fachkraft stets einen Schaltschrank oder dergleichen, beispielsweise mittels eines Spezialwerkzeugs, öffnen muss, um die Montage bzw. Demontage eines Schaltgerätes vornehmen zu können.

Ein weiterer erheblicher Nachteil derartiger herkömmlicher Stromsammelschienensysteme besteht darin, dass nach dem Öffnen eines Schaltschrankes durch einen Nutzer kein Berührungsschutz mehr besteht, insbesondere wenn der Nutzer vergisst, das Stromsammelschienensystem spannungsfrei zu schalten.

Aus der DE 23 60 260 A1 ist ein Berührungsschutz für Sammelschienen in elektrischen Verteileranlagen mit Öffnungen bekannt, durch welche hindurch ohne Abnahme des Berührungsschutzes elektrische Verbindungen mit der Sammelschiene herstellbar sind, bestehend aus einem plattenartigen Teil und einem daran anschließenden die Verbindung mit der Sammelschiene ergebenden Befestigungsteil. Der Berührungsschutz eignet sich insbesondere für eine Sammelschiene mit spiegelbildlich symmetrischem Querschnitt, beispielsweise einer Sammelschiene im Z-Profil. Beim Einsatz in Verteilerschränken mit mehreren waagerecht verlaufenden übereinander angeordneten Phasenschienen mit einem derartigen Querschnitt, wird die vertikale Ausdehnung oder Höhe des plattenartigen Teiles derart gewählt, dass ein auf die Vorderseite der Stromschiene aufgesetzter Berührungsschutz mit seinem plattenartigen Teil die Oberkante des plattenartigen Teils eines entsprechenden Berührungsschutzes reichlich überlappt, der an der Rückseite der nächsten darunterliegenden Sammelschiene angebracht ist.

In der EP 2 037 550 A1 ist weiter ein Berührschutz offenbart für eine einen rechteckigen Querschnitt aufweisende Schiene, insbesondere Sammelschiene, in einer elektrischen Verteileranlage und dergleichen, mit Schlitzen im Berührschutz, durch die ohne Abnahme des Berührschutzes eine elektrische Verbindung mit der Schiene herstellbar ist. Die elektrische Verbindung wird mittels einer Klemme mit Klemmbacken erzielt. Eine Klemmbacke weist dabei Zähne auf, die Schlitze durchsetzen und die Schiene auf einer Seite kontaktieren. Eine andere Klemmbacke kontaktiert die Schiene auf der der einen Seite abgewandten Seite.

Die EP 1 206 019 A2 betrifft wiederum eine Abdeckung für ein Sammelschienensystem, wobei die Abdeckung auf Sammelschienen aufsteckbar ist. Die Abdeckung für ein aus drei horizontal und parallel zueinander angeordneten Sammelschienen gebildetes Sammelschienensystem ist durch mehrere in überlappender Anordnung gebildete Abdeckelemente gebildet. Entsprechend der Längserstreckung der jeweiligen Sammelschiene sind über deren ganzen Länge Abdeckelemente in überlappender Anordnung zu positionieren. Das jeweilige Abdeckelement ist L-förmig ausgebildet und weist einen langen flächen Abdeckabschnitt und einen kurzen Bereich auf. Der Abdeckabschnitt ist länger als die Breitenerstreckung des Sammelschienensystems und der kurze Bereich besitzt eine Länge, die ein Mehrfaches der Tiefe der jeweiligen Sammelschiene beträgt. Auf der dem kurzen Bereich zugewandten Seite ist der lange Abdeckabschnitt mit drei sich senkrecht zum Abdeckabschnitt und parallel zum kurzen Bereich erstreckenden Anschlägen versehen. Das Abdeckelement weist die dem jeweiligen Anschlag zugeordneten, oberhalb der jeweiligen Anschläge angeordneten Steckansätze, die in Art federnder Haken 8 ausgebildet sind.

Es ist daher eine Aufgabe der vorliegenden Erfindung, ein Berührungsschutzsystem für Stromsammelschienen zu schaffen, das die oben genannten Nachteile vermeidet und einem Nutzer einen sicheren Berührungsschutz bietet.

Diese Aufgabe wird erfindungsgemäß durch ein Berührungsschutzsystem mit den in Patentanspruch 1 angegebenen Merkmalen gelöst.

Das erfindungsgemäße Berührungsschutzsystem bietet somit den Vorteil, dass ein Nutzer selbst nach Öffnen eines Schaltschrankes oder dergleichen durch das direkt an den Stromsammelschienen angebrachte erfindungsgemäße Berührungsschutzsystem vor Stromschlägen geschützt wird.

Ein weiterer Vorteil des erfindungsgemäßen Berührungsschutzsystems besteht darin, dass es modular aufgebaut ist und die Berührungsschutzmodule miteinander gegenseitig in einfacher Weise verrastbar sind. Hierdurch wird die Montage des Berührungsschutzsystems erleichtert.

Ein weiterer Vorteil des erfindungsgemäßen Berührungsschutzsystems besteht darin, dass Anschlussklemmen von beliebigen elektrischen Geräten in einfacher Weise in die Klemmen-Aufnahmebereiche der Berührungsschutzmodule eingeführt werden können und dabei isolierend derart eingebettet werden, dass eine zusätzliche Isolation zwischen den Stromsammelschienen bewirkt wird. Erfindungsgemäss weisen die Klemmen-Aufnahmebereiche der Berührungsschutzmodule jeweils parallel angeordnete Kontaktierungsschlitze zur elektrischen Kontaktierung der Stromsammelschienen mittels der Anschlussklemmen auf.

Die parallel angeordneten Kontaktierungsschlitze sind dabei geometrisch derart ausgeformt, dass die Schutzart IP20 erreicht wird und somit eine direkte Berührung einer Stromsammelschiene durch einen Finger eines Nutzers durch die Kontaktierungsschlitze hindurch ausgeschlossen ist.

Bei einer weiteren möglichen Ausführungsform des erfindungsgemäßen Berührungsschutzsystems sind die Kontaktierungsschlitze der Klemmen-Aufnahmebereiche an den Haltefüßen zum Hintergreifen der Stromsammelschienen diesen Haltefüßen gegenüberliegend angeordnet.

Bei einer weiteren möglichen Ausführungsform des erfindungsgemäßen Berührungsschutzsystems sind die Kontaktierungsschlitze der Berührungsschutzmodule derart ausgebildet, dass sie eine einheitliche Teilung aller miteinander verrasteten Berührungsschutzmodule bereitstellen.

Damit ist es möglich, ein Gerät an einer beliebigen Stelle auf die Stromsammelschienen zu montieren.

Bei einer weiteren möglichen Ausführungsform des erfindungsgemäßen Berührungsschutzsystems weisen die Klemmen-Aufnahmebereiche der Berührungsschutzmodule dachförmig angeschrägte Einführeinrichtungen zum Einführen von Klemmbügeln der Anschlussklemmen auf, welche zum Festklemmen der Anschlussklemmen an die Stromsammelschienen vorgesehen sind.

Diese Ausführungsform bietet den Vorteil, dass die Anschlussklemmen in sehr einfacher Weise durch einen Monteur in die Einführeinrichtungen einführbar sind, ohne dass dieser hierfür sich besonders konzentrieren muss. Durch die Einführeinrichtungen werden die Anschlussklemmen direkt in die geeignete Position zum Aufsetzen auf die Kontaktierungsschlitze geführt.

Bei einer weiteren möglichen Ausführungsform des erfindungsgemäßen Berührungsschutzsystems sind die Anschlussklemmen jeweils mit einem Schaltgerät verbunden, das von den Stromsammelschienen elektrischen Strom bezieht.

Bei einer weiteren möglichen Ausführungsform des erfindungsgemäßen Berührungsschutzsystems weist jede Anschlussklemme eine Kontaktplatte mit parallel angeordneten Kontaktlamellen auf, die durch die Kontaktierungsschlitze eines Berührungsschutzmoduls hindurch eine darunterliegende Stromsammelschiene elektrisch kontaktieren.

Bei einer weiteren Ausführungsform des erfindungsgemäßen Berührungsschutzsystems wird die Kontaktplatte der Anschlussklemme durch zwei gegenüberliegende Führungsnuten geführt, die in gegenüberliegenden Klemmbügeln der Anschlussklemme vorgesehen sind.

Bei einer weiteren möglichen Ausführungsform des erfindungsgemäßen Berührungsschutzsystems wird die Kontaktplatte der Anschlussklemme mittels einer Schraube und Federscheibe gegen die Stromsammelschiene gepresst.

Bei einer weiteren möglichen Ausführungsform des erfindungsgemäßen Berührungsschutzsystems ist zwischen der Federscheibe und der Kontaktplatte der Anschlussklemme eine Verbindungsschiene oder eine Anschlussplatte klemmbar.

Bei einer weiteren möglichen Ausführungsform des erfindungsgemäßen Berührungsschutzsystems ist an die Anschlussplatte mindestens eine Prismenklemme für eine Rund- und Sektorleitung oder ein Flachband angebracht.

Bei einer weiteren möglichen Ausführungsform des erfindungsgemäßen Berührungsschutzsystems sind Schienenträgerabdeckmodule zum Abdecken von Stromsammelschienenträgern vorgesehen, wobei die Schienenträgerabdeckmodule mittels Verrastungselementen mit benachbarten Berührungsschutzmodulen verrastbar sind.

Diese Ausführungsform bietet den Vorteil, dass auch im Bereich der Stromsammelschienenträger eine sichere Abdeckung und ein entsprechender Berührungsschutz gewährleistet sind.

Bei dem erfindungsgemäßen Berührungsschutzsystem sind die Berührungsschutzmodule auf mehreren in horizontaler Richtung parallel angeordneten Stromsammelschienen derart aufschiebbar, dass die Haltefüße der Berührungsschutzmodule die Stromsammelschienen hintergreifen.

Dies bietet den Vorteil, dass die Berührungsschutzmodule in besonders einfacher und bequemer Weise an die Stromsammelschienen angebracht werden können.

Bei dem erfindungsgemäßen Berührungsschutzsystem ist an einer unteren Kante der auf die Stromsammelschienen aufgeschobenen und miteinander verrasteten Berührungsschutzmodule ein Randprofil einsteckbar, das mit Schienenträgerabdeckmodulen kraftschlüssig verrastbar ist und somit ein unbeabsichtigtes Herunterschieben der Berührungsschutzmodule von den Stromsammeischienen verhindert.

Bei einer weiteren möglichen Ausführungsform des erfindungsgemäßen Berührungsschutzsystems sind die Berührungsschutzmodule mit einer zusätzlichen komplett geschlossenen Abdeckung abdeckbar und/oder verschließbar.

Hierdurch wird ein frontseitig 100 %-iger Berührungsschutz gewährleistet.

Bei einer weiteren möglichen Ausführungsform des erfindungsgemäßen Berührungsschutzsystems weist jedes Berührungsschutzmodul des Berührungsschutzsystems für jede abzudeckende Stromsammelschiene jeweils mehrere Haltefüße zum Hintergreifen der jeweiligen Stromsammelschiene auf, wobei an benachbarten Kammern der Berührungsschutzmodule eine Abdeckeinrichtung zur Erhöhung der Störlichtbogenfestigkeit befestigbar ist.

Bei einer weiteren möglichen Ausführungsform des erfindungsgemäßen Berührungsschutzsystems bestehen die Berührungsschutzmodule, die Schienenträgerabdeckmodule sowie die Randprofile des Berührungsschutzsystems aus einem elektrisch isolierenden, wärmestabilen und im Brandfall selbstverlöschenden Kunststoff.

Dies bietet zum einen den Vorteil, dass die Module des Berührungsschutzsystems leicht sind und somit einfach transportierbar und montierbar sind. Darüber hinaus gewährleisten die Module des Berührungsschutzsystems einen zuverlässigen Schutz gegenüber Lichtbogeneinwirkungen aufsitzender und benachbarter Schaltgeräte.

Im Weiteren werden mögliche Ausführungsformen des erfindungsgemäßen Berührungsschutzsystems unter Bezugnahme auf die beigefügten Figuren näher erläutert.

Es zeigen:
- Fig. 1: einen perspektivischen Blick schräg von oben auf ein Ausführungsbeispiel eines Berührungsschutzsystems gemäß der Erfindung;
- Fig. 2: einen weiteren perspektivischen Blick auf ein Ausführungsbeispiel eines erfindungsgemäßen Berührungsschutzsystems;
- Fig. 3: eine auf dem erfindungsgemäßen Berührungsschutzsystem anbringbare Anschlussklemme;
- Fign. 4, 5: perspektivische Ansichten auf ein Ausführungsbeispiel eines bei dem erfindungsgemäßen Berührungsschutzsystem verwendeten Schienenträgerabdeckmoduls;
- Fig. 6: eine perspektivische Ansicht auf mehrere miteinander verrastete Berührungsschutzmodule des erfindungsgemäßen Berührungsschutzsystems von hinten;
- Fig. 7: eine perspektivische Ansicht zur Darstellung einer bei dem erfindungsgemäßen Berührungsschutzsystem auf eine Stromsammelschiene aufgesetzten Anschlussklemme;
- Fig. 8: eine perspektivische Darstellung mehrerer auf eine Stromsammelschiene montierter Anschlussklemmen;
- Fign. 9, 10: perspektivische Ansichten auf ein Ausführungsbeispiel eines bei dem erfindungsgemäßen Berührungsschutzsystem verwendeten Berührungsschutzmoduls von seitlich oben und seitlich unten;
- Fign. 11, 12: Detailansichten zur Darstellung einer Montage einer Anschlussklemme, die eine Stromsammelschiene durch Kontaktschlitze eines erfindungsgemäßen Berührungsschutzmoduls hindurch kontaktiert;
- Fign. 13, 14: weitere Ansichten zur Darstellung einer Verrastung zwischen verschiedenen Modulen des erfindungsgemäßen Berührungsschutzsystems;
- Fign. 15A, 15B: Ansichten einer bei dem erfindungsgemäßen Berührungsschutzsystem verwendbaren Anschlussklemme;
- Fign. 16A, 16B: perspektivische Ansichten von Bauelementen der in den Figuren 20 dargestellten Anschlussklemme;
- Fign. 17A, 17B: Ansichten zur Darstellung des Anschlusses einer Verbindungsschiene mithilfe einer Anschlussklemme;
- Fign. 18A, 18B, 18C: Ansichten zur Darstellung der Montage einer Anschlussplatte mithilfe von Anschlussklemmen bei dem erfindungsgemäßen Berührungsschutzsystem;
- Fign. 19A, 19B: Ansichten zur Darstellung von Prismenklemmen für Rund- und Sektorleitungen mithilfe von Anschlussklemmen bei dem erfindungsgemäßen Berührungsschutzsystem.

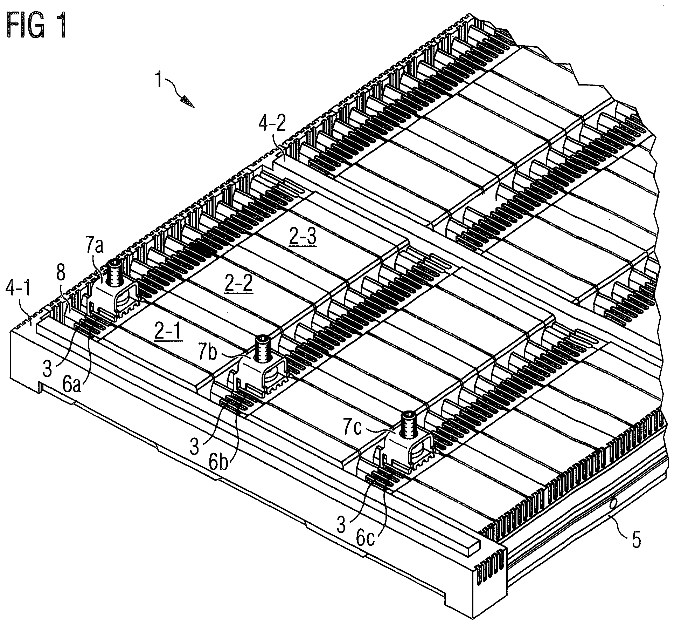

Wie man aus Fig. 1 erkennen kann, ist das erfindungsgemäße Berührungsschutzsystem 1 für Stromsammelschienen 9 modular aufgebaut. Dabei sind mehrere Berührungsschutzmodule 2, die jeweils Haltefüße zum Hintergreifen der Stromsammelschienen 9 aufweisen, mithilfe von Verrastungselementen gegenseitig mit benachbarten Berührungsschutzmodulen 2 verrastet und bedecken die (in Fig. 1 nicht sichtbaren) Stromsammelschienen 9 flächig. Die in Fig. 1 dargestellten flächig ausgebildeten Berührungsschutzmodule 2 sind vorzugsweise mithilfe der Haltefüße auf die Stromsammelschienen 9 aufsteckbar bzw. auf diese schiebbar. Daher ist das Anbringen der Berührungsschutzmodule 2 an die Stromsammelschienen 9 in einfacher Weise durchführbar. Jedes der Berührungsschutzmodule 2-i weist für jede Stromsammelschiene 9 einen Klemmen-Aufnahmebereich 6 zur Aufnahme von Anschlussklemmen 7 auf, wobei die Anschlussklemmen 7 zur elektrischen Kontaktierung der unter den Berührungsschutzmodulen 2 liegenden Stromsammelschienen 9 vorgesehen sind. Bei dem in Fig. 1 dargestellten Ausführungsbeispiel ist das Berührungsschutzsystem 1 für drei parallel verlaufende Stromsammelschienen 9a, 9b, 9c vorgesehen. Dementsprechend weist jedes Berührungsschutzmodul 2-i drei Klemmen-Aufnahmebereiche 6a, 6b, 6c zur Aufnahme von Anschlussklemmen 7 auf, die zur elektrischen Kontaktierung der jeweiligen Stromsammelschiene 9a, 9b, 9c vorgesehen sind. Bei dem in Fig. 1 dargestellten Ausführungsbeispiel werden die Stromsammelschienen (nicht in Fig. 1 sichtbar) durch Stromsammelschienenträger beispielsweise an einer Wand gehalten. Diese Stromsammelschienenträger werden bei dem in Fig. 1 dargestellten Ausführungsbeispiel durch Schienenträgerabdeckmodule 4-1, 4-2 abgedeckt, um auch in diesem Bereich einen Berührungsschutz für den Nutzer zu bieten. Zwischen den Schienenträgerabdeckmodulen 4-1, 4-2 befinden sich in dem dargestellten Ausführungsbeispiel drei nebeneinander angebrachte Berührungsschutzmodule 2-1, 2-2, 2-3. Die verschiedenen Module 2-i des Berührungssystems 1 sind mithilfe von Verrastungsbauelementen miteinander verrastet. Dabei sind die Berührungsschutzmodule 2-1, 2-2 miteinander verrastet und ferner sind auch die Schienenträgerabdeckmodule 4-1, 4-2 jeweils mittels Verrastungselementen mit zwei benachbarten Berührungsschutzmodulen 2 verrastet. So ist beispielsweise in Fig. 1 das Schienenträgerabdeckmodul 4-1 mit dem daneben rechts angeordneten Berührungsschutzmodul 2-1 verrastet.

Die Berührungsschutzmodule 2-i sind auf mehreren in horizontaler Richtung parallel angeordneten Stromsammelschienen 9 derart aufschiebbar, dass die Haltefüße der Berührungsschutzmodule 2-i die Stromsammelschienen 9 hintergreifen. Bei dem in Fig. 1 dargestellten Ausführungsbeispiel sind die Berührungsschutzmodule 2-i in drei in horizontaler Richtung parallel angeordneten Stromsammelschienen 9a, 9b, 9c (nicht sichtbar) aufgeschoben, sodass die Haltefüße der Berührungsschutzmodule 2 die drei Stromsammelschienen 9a, 9b, 9c hintergreifen. Wie in Fig. 1 ebenfalls erkennbar, ist an einer unteren Kante der auf die Stromsammelschienen 9 aufgeschobenen und miteinander verrasteten Berührungsschutzmodule 2-i ein Randprofil 5 angebracht. Dieses Randprofil 5 ist ferner mit den Schienenträgerabdeckmodulen 4-1, 4-2 kraftschlüssig verrastet und verhindert auf diese Weise ein unbeabsichtigtes Herunterschieben der Berührungsschutzmodule 2-i von den darunterliegenden Stromsammelschienen 9.

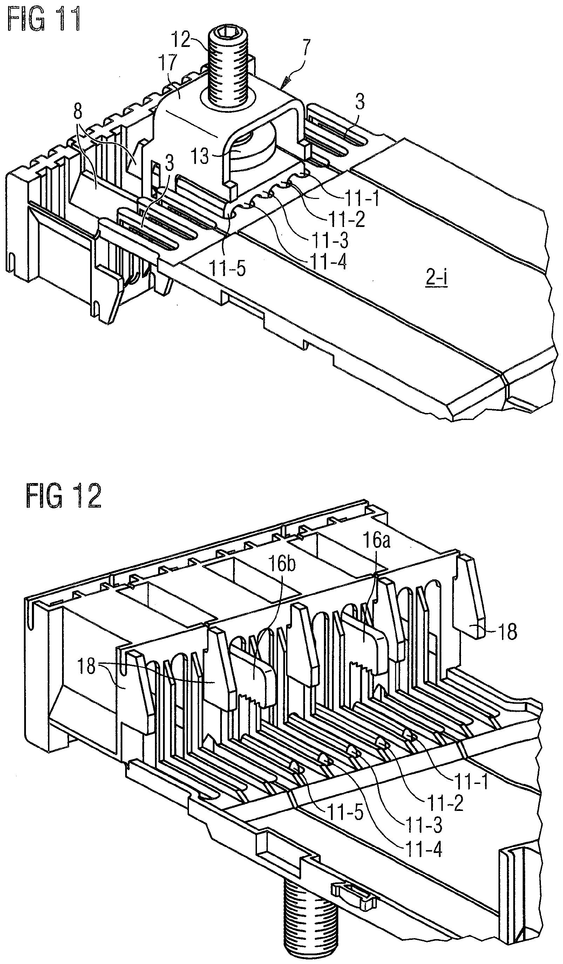

Bei dem in Fig. 1 dargestellten Ausführungsbeispiel weist jedes Berührungsschutzmodul 2-i eine der Anzahl der Stromsammelschienen 9 entsprechende Anzahl von Klemmen-Aufnahmebereichen auf. Bei dem in Fig. 1 dargestellten Ausführungsbeispiel werden für drei parallel verlaufende Stromsammelschienen 9 an den Berührungsschutzmodulen 2-i jeweils drei Klemmen-Aufnahmebereiche 6a, 6b, 6c vorgesehen. Die Klemmen-Aufnahmebereiche 6a, 6b, 6c weisen jeweils parallel angeordnete Kontaktierungsschlitze 3 auf, wie in Fig. 1 und 11 dargestellt. Diese Kontaktierungsschlitze 3 dienen zur elektrischen Kontaktierung der darunterliegenden Stromsammelschienen 9 mittels Anschlussklemmen 7. Bei dem in Fig. 1 dargestellten Ausführungsbeispiel sind drei Kontaktierungsklemmen 7a, 7b, 7c gezeigt. Die erste Kontaktierungsklemme 7a ist im Bereich des ersten Klemmen-Aufnahmebereichs 6a zur elektrischen Kontaktierung einer darunterliegenden Stromsammelschiene 9a montiert. In gleicher Weise sind die Anschlussklemmen 7b, 7c in Anschlussklemmbereichen 6b, 6c des Berührungsschutzmoduls 2-i angebracht, um entsprechende darunterliegende Stromsammelschienen 9b, 9c elektrisch zu kontaktieren.

Wie man in Fig. 1 erkennen kann, sind die Kontaktierungsschlitze der Berührungsschutzmodule 2-i derart ausgebildet, dass sie eine einheitliche Teilung aller miteinander verrasteten Berührungsschutzmodule 2 bereitstellen. Die Teilung beträgt bei einer möglichen Ausführungsform 50 : 6 = 8,33 mm, sodass eine Kontaktierung an einer beliebigen Stelle möglich ist. Mit dieser Schlitzteilung von 8,33 mm ist es möglich, alle in einem 185 mm-System vorkommenden elektrischen Geräte, insbesondere NH-Leisten und Schaltleisten (GR00-3), elektrisch mit den Stromsammelschienen 9 zu verbinden. Bei dem in Fig. 1 dargestellten Ausführungsbeispiel eignet sich das Berührungsschutzsystem 1 für drei parallel angeordnete Stromsammelschienen 9a, 9b, 9c die beispielsweise verschiedene elektrische Phasen L1, L2, L3 für ein elektrisches Gerät bereitstellen.

Wie in Fig. 1 erkennbar, weisen die Klemmen-Anschlussbereiche 6a, 6b, 6c dachförmig angeschrägte Einführeinrichtungen 8 auf. Diese dachförmig angeschrägten Einführeinrichtungen 8 dienen zum Einführen von Klemmbügeln der Anschlussklemmen 7, welche zum Festklemmen der Anschlussklemmen 7 an die Stromsammelschienen 9 vorgesehen sind. Die in Fig. 1 dargestellten Anschlussklemmen 7a, 7b, 7c können mit einem zugehörigen Schaltgerät verbunden sein, das von den Stromsammelschienen 9 elektrischen Strom bezieht. Die in Fig. 1 dargestellten Module des Berührungsschutzsystems 1, d.h. die Berührungsschutzmodule 2-i, die Schienenträgerabdeckmodule 4-i sowie die Randprofile 5, bestehen vorzugsweise aus einem elektrisch isolierenden, wärmestabilen und feuerhemmenden Material. Mithilfe der Anschlussklemmen 7 können beliebige Schaltgeräte oder Baugruppen auf die Stromsammelschienen 9 geklemmt und mit diesen kontaktiert werden.

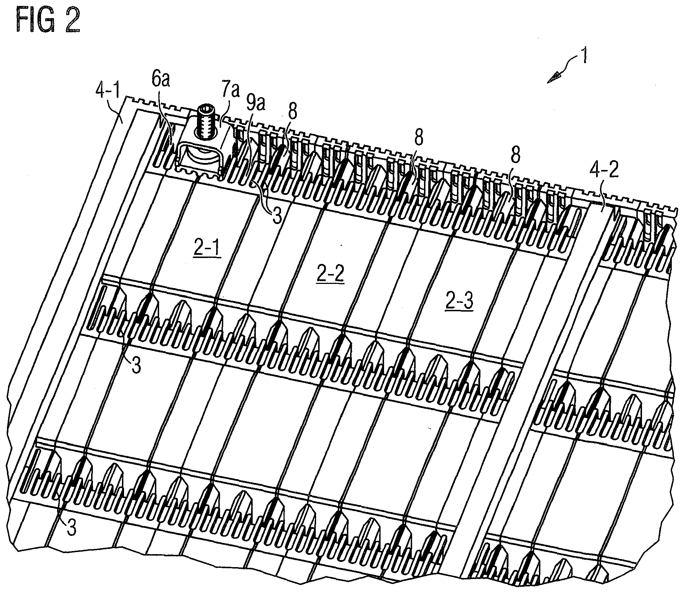

Fig. 2 zeigt eine weitere perspektivische Ansicht auf ein Berührungsschutzsystem 1 gemäß der Erfindung. In Fig. 2 erkennt man eine in einem Klemmen-Anschlussbereich 6a montierte Anschlussklemme 7a zur elektrischen Kontaktierung einer darunterliegenden Stromsammelschiene 9a. Die parallel angeordneten Kontaktierungsschlitze 3 bedecken dabei kammförmig zumindest teilweise die darunterliegende Stromsammelschiene 9a, wie in Fig. 2 erkennbar ist. Neben den Kontaktierungsschlitzen 3 befinden sich die dachförmig angeschrägten Einführeinrichtungen 8, die ein Einführen von Klemmbügeln der Anschlussklemmen 7 in den Klemmen-Aufnahmebereich 6a erleichtern. Bei dem in Fig. 2 dargestellten Ausführungsbeispiel bedecken die Kontaktierungsschlitze 3 einen Randbereich der darunterliegenden Stromsammelschiene 9a ähnlich einem Kamm. Die Länge der Kontaktierungsschlitze 3 sowie deren Breite kann in Abhängigkeit davon variieren, wie viel Strom an das anzuschließende Gerät über die Anschlussklemme 7 zu übertragen ist. Die geometrische Form der Kontaktierungsschlitze 3 gewährleistet in jedem Fall, dass die darunterliegende Stromsammelschiene 9 mittels Fingern des Nutzers nicht berührt werden kann.

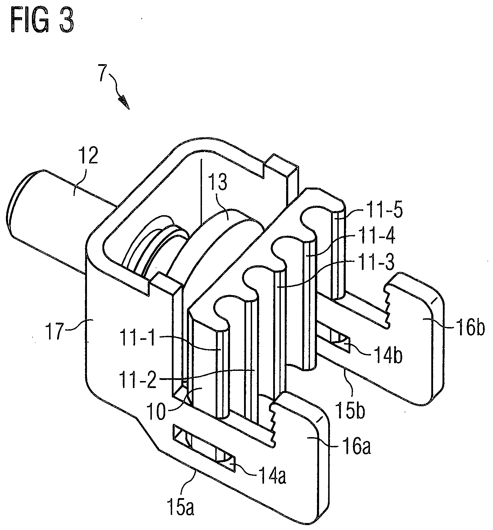

Fig. 3 zeigt perspektivisch ein Ausführungsbeispiel einer Anschlussklemme 7, wie sie bei dem erfindungsgemäßen Berührungssystem 1 eingesetzt werden kann. Die Anschlussklemme 7 weist eine Kontaktplatte 10 auf. Die Kontaktplatte 10 besitzt parallel angeordnete Kontaktlamellen 11-1, 11-2, 11-3, 11-4, 11-5. In dem dargestellten Ausführungsbeispiel besitzt die Kontaktplatte 10 fünf Kontaktlamellen. Die Anzahl der Kontaktlamellen der Kontaktplatte 10 kann variieren. Die Kontaktlamellen der Kontaktplatte 10 weisen eine Höhe von mehreren Millimetern, beispielsweise 6 bis 8 mm auf. Der Abstand zwischen den Scheitelpunkten der Kontaktlamellen 11-i entspricht einer vorgegebenen Teilung von beispielsweise 50 : 6 = 8,33 mm. Die in Fig. 3 dargestellten Kontaktlamellen 11-i sind geeignet, durch die Kontaktierungsschlitze 3 des Berührungsschutzmoduls 2 hindurch eine darunterliegende Stromsammelschiene 9 elektrisch zu kontaktieren. Die Kontaktplatte 10 besteht aus einem elektrisch leitfähigen Material. Die Kontaktplatte 10 der Anschlussklemme 7 wird mittels einer Klemmschraube 12 und einer Federscheibe 13 gegen eine Stromsammelschiene 9 gepresst bzw. gedrückt. Die Kontaktierungsplatte 10 der Anschlussklemme 7 wird bei dem in Fig. 3 dargestellten Ausführungsbeispiel durch zwei gegenüberliegende Führungsnuten 14a, 14b, die in den gegenüberliegenden Klemmbügeln 15a, 15b vorgesehen sind, geführt. Die Klemmbügel 15a, 15b sind im Wesentlichen L-förmig ausgebildet und weisen vorne Klemmhaken 16a, 16b auf, die geeignet sind, Sammelschienen, insbesondere Stromsammelschienen 9, zu hintergreifen. In dem in Fig. 3 dargestellten Ausführungsbeispiel weisen die Klemmhaken 16a, 16b der Klemmbügel 15a, 15b ein wellenförmiges bzw. raues Profil zum Hintergreifen der Stromsammelschienen 9 auf. Im montierten Zustand befindet sich zwischen der Kontaktplatte 10 und den Klemmhaken 16a, 16b die jeweilige Stromsammelschiene 9. Die beiden Klemmbügel 15a, 15b sind über ein U-förmiges Basisprofil 17 miteinander verbunden. Dieses U-förmige Basisprofil weist eine Öffnung auf, durch welche die Klemmschraube 12 hindurch mit der Federscheibe 13 verbunden ist.

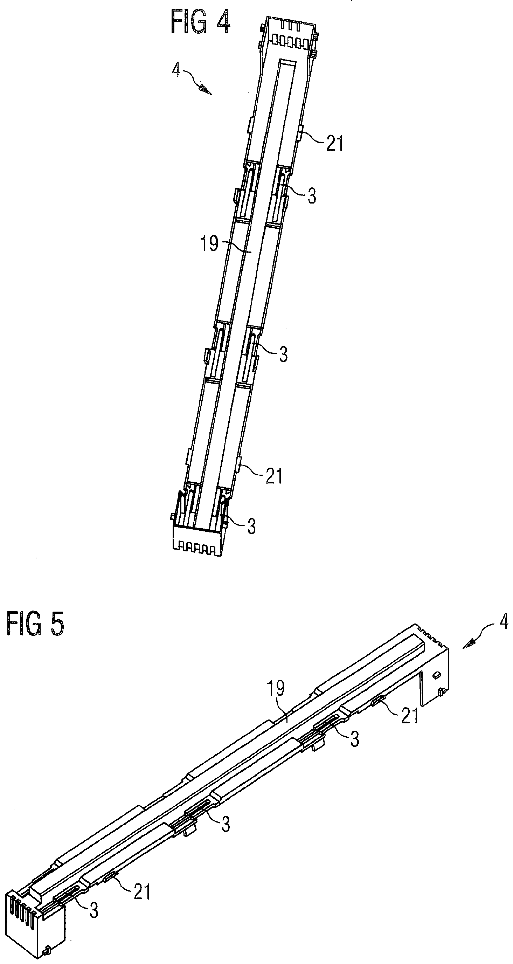

Die Figuren 4, 5 zeigen perspektivische Ansichten auf ein Ausführungsbeispiel eines bei dem erfindungsgemäßen Berührungsschutzsystem 1 verwendeten Sammelschienenträgerabdeckmoduls 4. Wie man in den Figuren 4, 5 erkennen kann, weist das Sammelschienenträgerabdeckmodul 4 einen Steg 19 auf, wobei in dem dargestellten Ausführungsbeispiel für die verschiedenen Stromsammelschienen 9 jeweils seitlich am Steg 19 ein Kontaktierungsschlitz 3 vorgesehen ist. Man erkennt ferner in den Figuren 4, 5, seitlich angebrachte Verrastbauelemente 21 zum Verrasten des Stromsammelschienenabdeckmoduls 4 mit benachbarten Berührungsschutzmodulen 2.

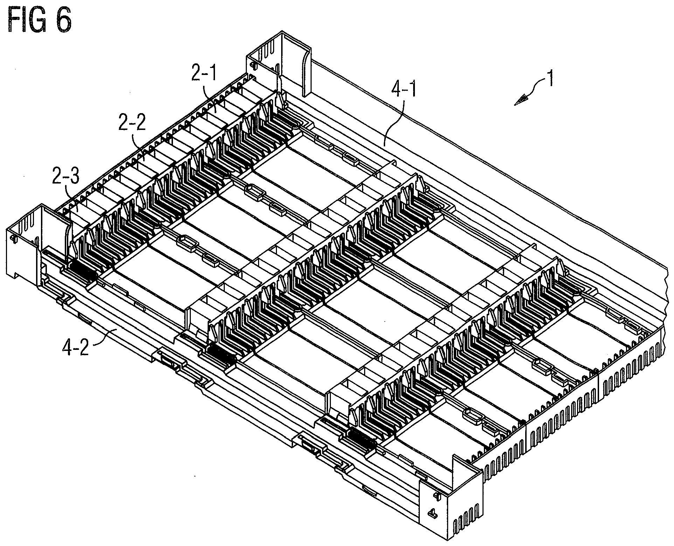

Fig. 6 zeigt eine perspektivische Ansicht auf ein Berührungsschutzsystem 1 gemäß der Erfindung von unten, d.h. aus Sicht der (dort nicht dargestellten) Stromsammelschienen. Man erkennt in Fig. 6, dass die Berührungsschutzmodule 2 jeweils drei Aufnahmekammern für die verschiedenen Stromsammelschienen 9a, 9b, 9c aufweisen.

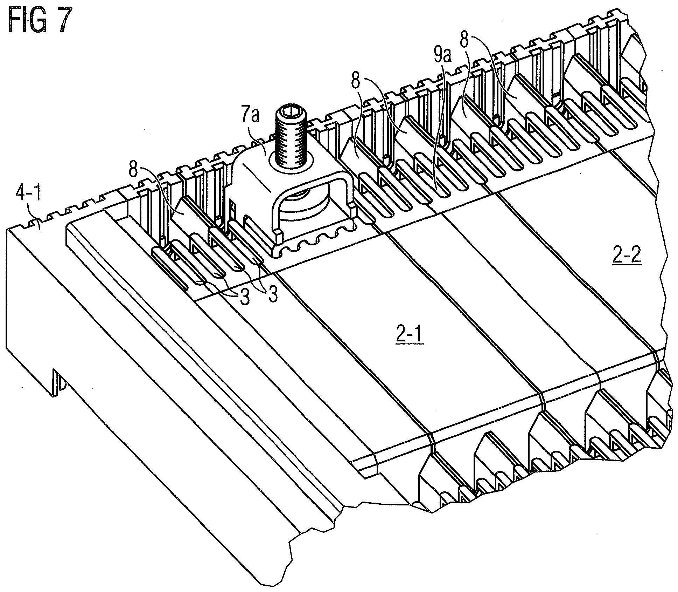

Fig. 7 zeigt eine perspektivische Detailansicht auf eine Anschlussklemme 7a, die auf eine Stromsammelschiene 9a montiert ist. Man erkennt in Fig. 7 die in dem Klemmen-Aufnahmebereich 6 der Berührungsschutzmodule 2 dachförmig angeschrägten Einführeinrichtungen 8 zum Einführen der Klemmbügel 15a, 15b der Anschlussklemmen 7. Beim Aufsetzen einer Anschlussklemme 7 wird die Anschlussklemme 7 durch die dachförmig angeschrägten Einführeinrichtungen 8 automatisch in die richtige Position zur Montage auf die darunterliegende Stromsammelschiene 9a bewegt. Die Kontaktierungsschlitze 3 innerhalb der Klemmen-Aufnahmebereiche 6 dienen nicht nur zur Kontaktierung der darunterliegenden Stromsammelschiene 9, sondern können zusätzlich auch zur Kühlung vorgesehen sein, insbesondere wenn die Anzahl der durch die Stromsammelschienen 9 montierten Anschlussklemmen 7 relativ gering ist, wie in Fig. 7 dargestellt.

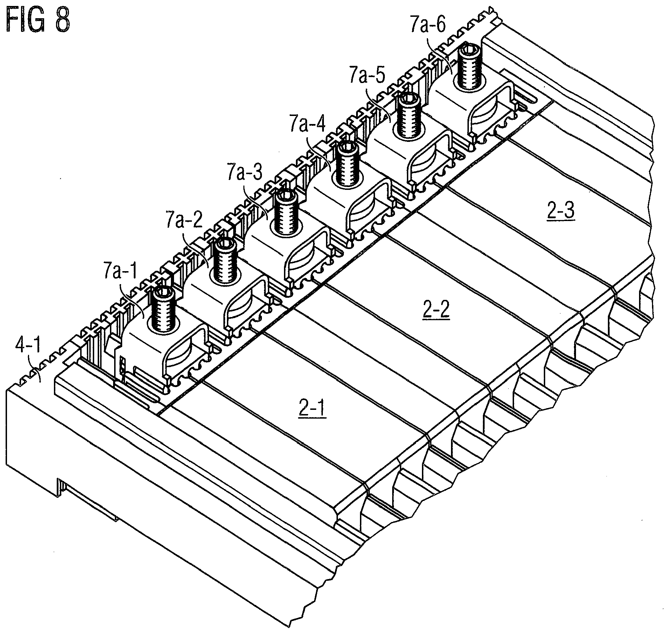

Bei dem in Fig. 8 dargestellten Ausführungsbeispiel sind eine Vielzahl von Anschlussklemmen 7a-1 bis 7a-6 auf die gleiche Stromsammelschiene 9a montiert, sodass alle Kontaktierungsschlitze durch die Lamellen 11 der Kontaktplatten 10 belegt sind.

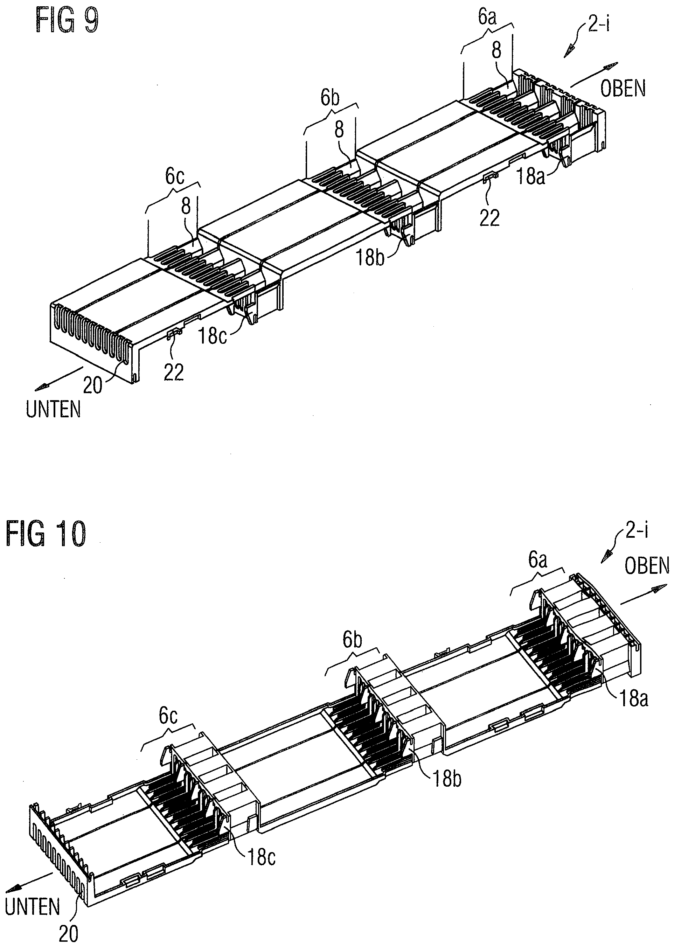

Die Figuren 9, 10 zeigen perspektivische Ansichten auf ein Ausführungsbeispiel eines Berührungsschutzmoduls 2-i. Fig. 9 zeigt eine Ansicht auf ein Berührungsschutzmodul 2 von schräg oben und Fig. 10 zeigt eine Ansicht auf dasselbe Berührungsschutzmodul 2 von schräg unten. Wie man in den Figuren 9, 10 erkennen kann, weist das Berührungsschutzmodul 2 drei Reihen von Haltefüßen 18a, 18b, 18c auf, welche geeignet sind, eine zugehörige Stromsammelschiene 9a, 9b, 9c zu hintergreifen. Man erkennt ferner in den Figuren 9, 10 die Klemmen-Aufnahmebereiche 6a, 6b, 6c des in den Figuren 9, 10 dargestellten Berührungsschutzmoduls 2. Die Klemmenaufnahmebereiche 6a, 6b, 6c des Berührungsschutzmoduls 2 weisen jeweils parallel angeordnete Kontaktierungsschlitze zur elektrischen Kontaktierung der zugehörigen Stromsammelschiene 9a, 9b, 9c mittels Anschlussklemmen 7 auf. Die Kontaktierungsschlitze 3 der Klemmen-Aufnahmebereiche 6a, 6b, 6c sind im Bereich der Haltefüße 18 zum Hintergreifen der Stromsammelschienen 9 vorgesehen, wobei sie diesen Haltefüßen 18 vorzugsweise gegenüberliegend angeordnet sind. In den Klemmen-Aufnahmebereichen 6a, 6b, 6c des Berührungsschutzmoduls 2 sind ferner die dachförmig angeschrägten Einführeinrichtungen 8 zum Einführen von Klemmbügeln 15a, 15b der Anschlussklemmen 7 vorgesehen, so wie in Fig. 9 leicht erkennbar. Beim Aufsetzen eines Berührungsschutzmoduls 2, wie es in den Figuren 9, 10 dargestellt ist, werden die Reihen von Haltefüßen 18a, 18b, 18c von oben auf parallel verlaufende Stromsammelschienen 9a, 9b, 9c aufgeschoben. In den Figuren 9, 10 erkennt man ferner Verrastungsbauelemente 22, die zum Verrasten mit danebenliegenden Modulen des Berührungsschutzsystems 1 vorgesehen sind. Bei dem in den Figuren 9, 10 dargestellten Ausführungsbeispiel weisen die Verrastungselemente 22 jeweils einen Rastvorsprung und eine danebenliegende Rastausnehmung auf, sodass die Module in einfacher Weise miteinander verrastet werden können.

Figuren 11, 12 zeigen Detailansichten der Montage einer Anschlussklemme 7 an einem Berührungsschutzmodul 2. Fig. 11 zeigt eine Ansicht von schräg oben, während Fig. 12 eine Detailansicht von schräg unten darstellt. Man erkennt in der Detailansicht von Fig. 12 die Haltefüße 18 des Berührungsschutzmoduls 2 sowie die durch die Kontaktierungsschlitze 3 hindurchragenden Kontaktierungslamellen 11 der Kontaktplatte 10 der Anschlussklemme 7. Ferner erkennt man die nach vorne ragenden Spitzen der Klemmbügel 15a, 15b bzw. die Klemmhaken 16a, 16b der Anschlussklemme 7. Wie man in Fig. 12 erkennen kann, ragen die Kontaktierungslamellen 11-i der Kontaktplatte 10 durch die Kontaktierungsschlitze 3 hindurch, sodass sie die darunterliegende (in Fig. 12 nicht dargestellte) Stromsammelschiene 9 elektrisch kontaktieren. Damit die Anschlussklemmen 7 exakt vertikal in die richtigen Schlitze 3 treffen, sind die Berührungsschutzmodule 2 mit dachförmig angeschrägten Einführhilfen 8 versehen. Mit den Anschlussklemmen 7 können beliebige Schaltgeräte oder Baugruppen auf die Stromsammelschienen 9 geklemmt werden.

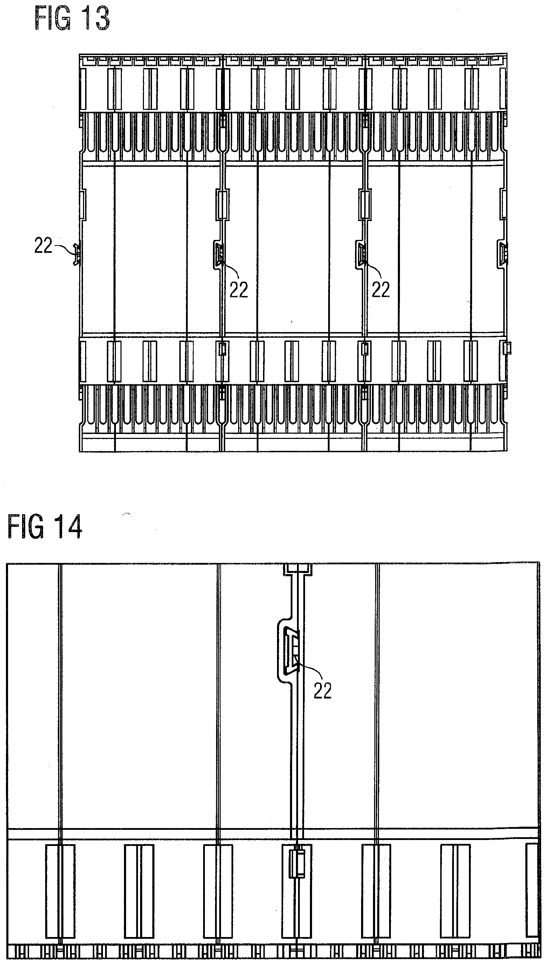

Auch die Figuren 13, 14 verdeutlichen die Verrastung der verschiedenen Berührungsschutzmodule 2 mit benachbarten Berührungsschutzmodulen 2 bei einem Ausführungsbeispiel des erfindungsgemäßen Berührungsschutzsystems 1.

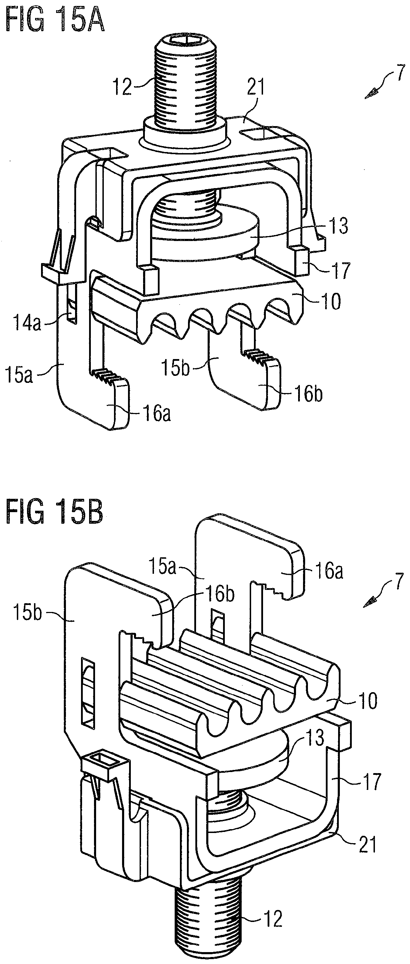

Figuren 15A, 15B zeigen perspektivische Ansichten auf ein Ausführungsbeispiel einer Anschlussklemme 7 von schräg oben und schräg unten. Wie man in den Figuren 15A, 15B erkennen kann, können die Anschlussklemmen 7 jeweils einen Kunststoffclip 21 aufweisen. Mithilfe des Kunststoffclips 21 werden die Anschlussklemmen 7 in den Schaltgeräten festgehalten, damit sie während einer Gerätemontage in Position verbleiben.

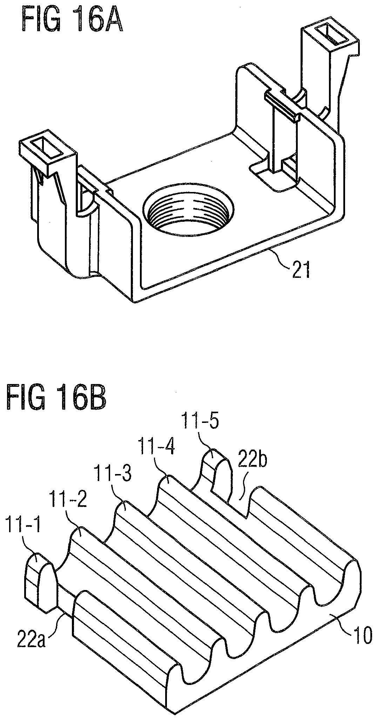

Figuren 16A, 16B zeigen exemplarisch Bauelemente einer in dem erfindungsgemäßen Berührungsschutzsystem 1 verwendeten Anschlussklemme 7. Fig. 16A zeigt ein Ausführungsbeispiel für einen Kunststoffclip mit einer Öffnung für die Klemmschraube 12. Fig. 16B zeigt ein Ausführungsbeispiel für eine Kontaktplatte 10 mit fünf Kontaktlamellen 11-1 bis 11-5, wobei in den äußeren Kontaktlamellen 11-1, 11-5 Ausnehmungen 22a, 22b vorgesehen sind, um die Kontaktplatte 10 in den gegenüberliegenden Klemmbügeln der Anschlussklemme 7 zu führen. Beispielsweise wird der hintere Abschnitt der Kontaktlamelle 11-1 und der Kontaktlamelle 11-5 jeweils in einer Führungsnut 14a, 14b eines zugehörigen Klemmbügels 15a, 15b geführt, wie in Fig. 3 dargestellt.

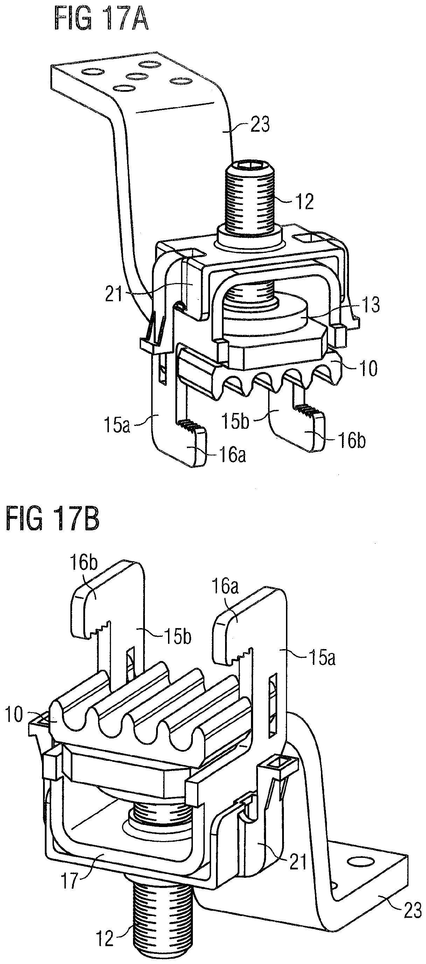

Figuren 17A, 17B zeigen die Möglichkeit einer Kontaktierung einer Verbindungsschiene 23 mithilfe einer Anschlussklemme 7. Wie man in Figuren 17A, 17B erkennen kann, wird ein vorderer Bereich der gebogenen Verbindungsschiene 23 zwischen die Federscheibe 13 und die Kontaktplatte 10 geklemmt. Die Kontaktplatte 10 kann beispielsweise durch Kontaktierungsschlitze eines Berührungsschutzmoduls 2 hindurch eine Stromsammelschiene 9 kontaktieren. Auf diese Weise gelangt der elektrische Strom über die Kontaktierungsplatte 10 zu der Verbindungsschiene 23. Die Verbindungsschiene 23 kann integrales Bauelement eines elektrischen Gerätes sein. Die Federscheibe 13 ist vorzugsweise federnd an die Klemmschraube 12 angenietet. Die die Stromsammelschiene 9 hintergreifenden Klemmbügel 15a, 15b der Anschlussklemme 7 bestehen beispielsweise aus Eisen oder Stahl. Die stromleitende Kontaktierungsplatte 10 kann beispielsweise aus Kupfer bestehen.

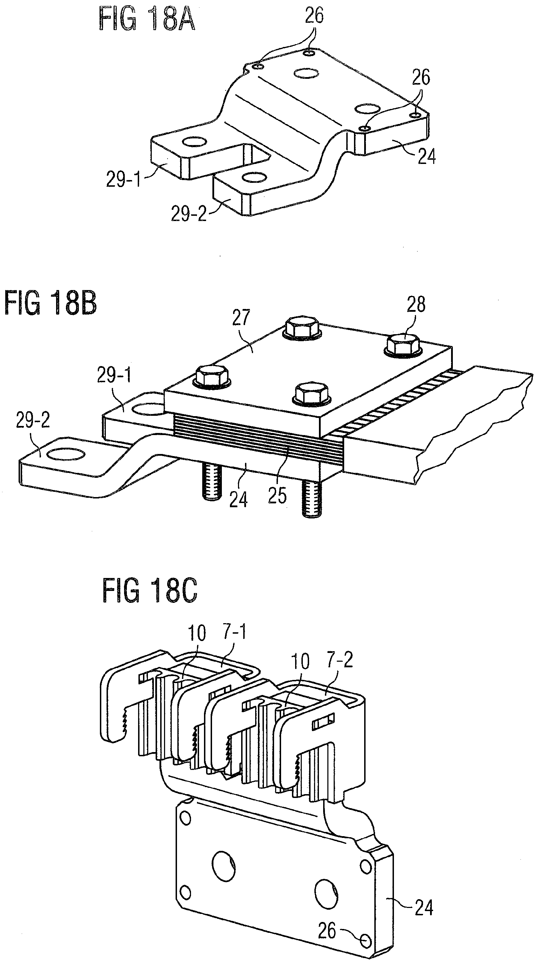

Figuren 18A, 18B, 18C zeigen die Möglichkeit, zwischen der Federscheibe 8 und der Kontaktplatte 10 der Anschlussklemme 7, eine Anschlussplatte 24 zu klemmen. Es ist somit möglich, mit den gleichen Anschlussklemmen 7 eine Anschlussplatte 24 auf die Stromsammelschienen 9 zu montieren. Diese Anschlussplatte 24 kann auch ein Flachband 25 aufnehmen, wobei Gewinde 26 am Plattenrand der Anschlussplatte 24 vorgesehen sein können. Das Flachband 25 wird mit einer zweiten flachen Platte 27 mittels Schrauben 28 mit der darunterliegenden Anschlussplatte 24 verschraubt. Wie in der Fig. 18C dargestellt, ist es möglich, beispielsweise mithilfe von zwei Anschlussklemmen 7-1, 7-2 zwei Vorsprünge 29-1, 29-2 der Anschlussplatte 24 über Kontaktplatten 10 an eine Stromsammelschiene 9 anzuschließen.

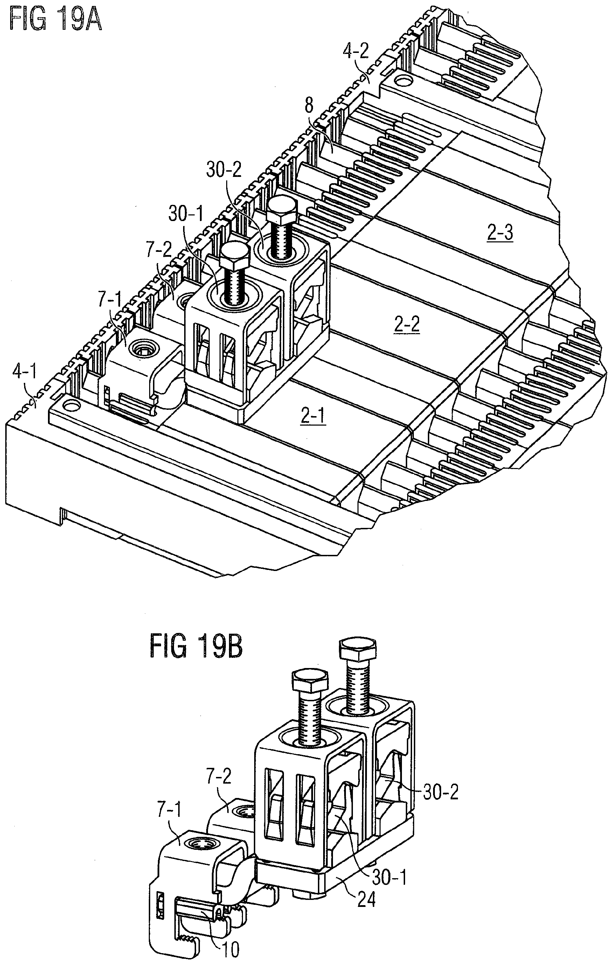

Figuren 19A, 19B zeigen die Möglichkeit, eine Anschlussplatte 24 mit Prismenklemmen 30-1, 30-2 für Rund- oder Sektorleitungen anzubringen. Es ist möglich bei einer Ausführungsform, die nach oben ragenden Bauteile, beispielsweise die in den Figuren 19A, 19B dargestellten Prismenklemmen 30, mit einer isolierenden Haube abzudecken, um einen zusätzlichen Berührungsschutz zu gewährleisten.

Ein Hauptvorteil des erfindungsgemäßen Berührungsschutzsystems 1 besteht darin, dass ein Schaltgerät durch einen Nutzer gefahrlos unter Spannung ausgewechselt werden kann. Bei einem entfernten Gerät bieten die Berührungsschutzmodule 2 vorzugsweise einen Berührungsschutz gemäß IP20. Das Berührungsschutzsystem 1 ist modular aufgebaut und bietet mittels der Anschlussklemmen 7 verschiedene Anschlussmöglichkeiten für unterschiedliche Anschlussmittel, beispielsweise Verbindungsschienen oder Prismenklemmen. Aufgrund der mechanisch stabilen Anschlussklemmen 7 ist es möglich, selbst Schaltgeräte mit einem hohen Gewicht zuverlässig an den Stromsammelschienen 9 zu montieren, wobei dies sogar möglich ist, wenn diese Stromsammelschienen 9 unter Strom stehen. Dabei ist der Nutzer durch das Berührungsschutzsystem 1 geschützt, da die Kontaktierungsschlitze der Berührungsschutzmodule 2 fingersicher sind. Das erfindungsgemäße Berührungsschutzsystem 1 bietet zudem den Vorteil, dass bestehende Stromsammelschienensysteme in einfacher Weise mit dem erfindungsgemäßen Berührungsschutzsystem 1 nachgerüstet werden können. Bei einer möglichen Ausführungsform des erfindungsgemäßen Berührungsschutzsystems 1 sind die Berührungsschutzmodule 2 mit einer zusätzlichen komplett geschlossenen Abdeckung abdeckbar und/oder verschließbar. Ferner kann an benachbarten Kammern der Berührungsschutzmodule 2 eine Abdeckeinrichtung zur Erhöhung einer Störlichtbogenfestigkeit vorgesehen oder befestigt werden. Somit ist das erfindungsgemäße Berührungsschutzsystem 1 zur Vermeidung von Störlichtbögen erweiterbar. Die Systemeinspeisung kann zudem mit der gleichen Kontaktierungseinrichtung inklusive Abdeckung erfolgen. Beispielsweise kann das erfindungsgemäße Berührungsschutzsystem 1 für verschiedene Querschnitte von 30 bis 120 x 10 mm ausgebildet sein.

## Patentansprüche

1. Berührungsschutzsystem (1) für mehrere in horizontaler Richtung parallel angeordnete Stromsammelschienen (9) mit flächig ausgebildeten Berührungsschutzmodulen (2), welche jeweils Haltefüße (18) zum Hintergreifen der Stromsammelschienen (9) und Verrastungselemente zum gegenseitigen Verrasten mit benachbarten Berührungsschutzmodulen (2) aufweisen,
wobei die Berührungsschutzmodule (2) jeweils für jede der Stromsammelschienen (9) einen Klemmen-Aufnahmebereich (6) zur Aufnahme von Anschlussklemmen (7), die zur elektrischen Kontaktierung der jeweiligen Stromsammelschiene (9) vorgesehen sind, aufweisen, wobei jedes Berührungsschutzmodul (2) eine der Anzahl der Stromsammelschienen (9) entsprechende Anzahl von Klemmen-Aufnahmebereichen (6) aufweist, wobei die Klemmen-Aufnahmebereiche (6) jeweils parallel angeordnete fingersichere Kontaktierungsschlitze (3) zur elektrischen Kontaktierung der Stromsammelschienen (9) mittels der Anschlussklemmen (7) aufweisen, wobei die Berührungsschutzmodule (2) auf mehreren in horizontaler Richtung parallel angeordneten Stromsammelschienen (9) derart aufschiebbar sind, dass die Haltefüße (18) der Berührungsschutzmodule (2) die Stromsammelschienen (9) hintergreifen,
wobei an einer unteren Kante der auf die Stromsammelschienen (9) aufgeschobenen und miteinander verrasteten Berührungsschutzmodule (2) ein Randprofil (5) einsteckbar ist, das mit Schienenträgerabdeckmodulen (4) kraftschlüssig verrastbar ist und somit ein unbeabsichtigtes Herunterschieben der Berührungsschutzmodule (2) von den Stromsammelschienen (9) verhindert.

2. Berührungsschutzsystem nach Anspruch 1,
wobei die Kontaktierungsschlitze (3) der Klemmen-Aufnahmebereiche (6) an den Haltefüßen (18) zum Hintergreifen der Stromsammelschienen (9) diesen Haltefüßen gegenüberliegend angeordnet sind.

3. Berührungsschutzsystem nach Anspruch 1 oder 2,
wobei die Kontaktierungsschlitze (3) der Berührungsschutzmodule (2) derart ausgebildet sind, dass sie eine einheitliche Teilung aller miteinander verrasteten Berührungsschutzmodule (2) bereitstellen.

4. Berührungsschutzsystem nach einem der vorangehenden Ansprüche 1 bis 3,
wobei die Klemmen-Aufnahmebereiche (6) der Berührungsschutzmodule (2) dachförmig angeschrägte Einführeinrichtungen (8) zum Einführen von Klemmbügeln (15a, 15b) der Anschlussklemmen (7) aufweisen, welche zum Festklemmen der Anschlussklemmen (7) an die Stromsammelschienen (9) vorgesehen sind.

5. Berührungsschutzsystem nach einem der vorangehenden Ansprüche 1 bis 4,
wobei die Anschlussklemmen (7) jeweils mit einem Schaltgerät verbunden sind, das von den Stromsammelschienen (9) elektrischen Strom bezieht.

6. Berührungsschutzsystem nach einem der vorangehenden Ansprüche 1 bis 5,
wobei die Anschlussklemme (7) eine Kontaktplatte (10) mit parallel angeordneten Kontaktlamellen (11) aufweist, die durch Kontaktierungsschlitze (3) eines Berührungsschutzmoduls (2) hindurch eine darunterliegende Stromsammelschiene (9) elektrisch kontaktieren.

7. Berührungsschutzsystem nach Anspruch 6,
wobei die Kontaktierungsplatte (10) der Anschlussklemme (7) durch zwei gegenüberliegende Führungsnuten (14a, 14b) geführt wird, die in gegenüberliegenden Klemmbügeln (15a, 15b) der Anschlussklemme (7) vorgesehen sind.

8. Berührungsschutzsystem nach Anspruch 6 oder 7,
wobei die Kontaktplatte (10) der Anschlussklemme (7) mittels einer Schraube (12) und Federscheibe (13) gegen die Stromsammelschiene (9) gepresst wird.

9. Berührungsschutzsystem nach Anspruch 8,
wobei zwischen der Federscheibe (13) und der Kontaktplatte (10) der Anschlussklemme (7) eine Verbindungsschiene (23) oder eine Anschlussplatte (24) klemmbar ist.

10. Berührungsschutzsystem nach Anspruch 9,
wobei an die Anschlussplatte (24) mindestens eine Prismenklemme (30) für eine Rund- und Sektorleitung oder ein Flachband (25) angebracht ist.

11. Berührungsschutzsystem nach einem der Ansprüche 1 bis 10,
wobei Schienenträgerabdeckmodule (4) zum Abdecken von Stromsammelschienenträgern vorgesehen sind, wobei die Schienenträgerabdeckmodule (4) mittels Verrastungselementen mit benachbarten Berührungsschutzmodulen (2) verrastbar sind.

12. Berührungsschutzsystem nach einem der Ansprüche 1 bis 11,
wobei die Berührungsschutzmodule (2) mit einer zusätzlichen komplett geschlossenen Abdeckung abdeckbar und/oder verschließbar sind.

13. Berührungsschutzsystem für Stromsammelschienen (9) nach einem der vorangehenden Ansprüche 1 bis 12
wobei jedes Berührungsschutzmodul (2) des Berührungsschutzsystems (1) für jede abzudeckende Stromsammelschiene (9) jeweils mehrere Haltefüße (18) zum Hintergreifen der jeweiligen Stromsammelschiene (9) aufweist,
wobei an benachbarten Kammern der Berührungsschutzmodule (2) eine Abdeckeinrichtung zur Erhöhung der Störlichtbogenfestigkeit befestigbar ist.

14. Berührungsschutzsystem nach einem der vorangehenden Ansprüche 1 bis 13,
wobei die Berührungsschutzmodule (2), die Schienenträgerabdeckmodule (4) und die Randprofile (5) des Berührungsschutzsystems (1) aus einem elektrisch isolierenden, wärmestabilen und feuerhemmenden Kunststoff bestehen.

## Claims

1. A contact protection system (1) for multiple power busbars (9) that are arranged parallel to one another in the horizontal direction, said power busbars having contact protection modules (2) that are embodied as planar and comprise in each case holding feet (18) for engaging behind the power busbars (9) and latching elements for mutually latching with adjacent contact protection modules (2),
wherein the contact protection modules (2) comprise in each case for each of the power busbars (9) a terminal receiving region (6) for receiving connecting terminals (7) that are provided so as to electrically contact the respective power busbar (9), wherein each contact protection module (2) comprises a number of terminal receiving regions (6), said number corresponding to the number of power busbars (9), wherein the terminal receiving regions (6) in each case comprise contacting slots (3) for allowing electrical contact with the power busbars (9) by means of the connecting terminals (7), said contacting slots being arranged parallel to one another and being finger-safe, wherein the contact protection modules (2) can be slid onto multiple power busbars (9) that are arranged parallel to one another in the horizontal direction in such a manner that the holding feet (18) of the contact protection modules (2) engage behind the power busbars (9),
wherein an edge profile (5) can be plugged onto a lower edge of the contact protection modules (2) that are latched to one another and slid onto the power bus bars (9) and said edge profile can be latched to power busbar carrier covering modules (4) in a non-positive locking manner and consequently the contact protection modules (2) are impeded from unintentionally sliding from the power busbars (9).

2. The contact protection system according to claim 1,
wherein the contacting slots (3) of the terminal receiving regions (6) are arranged on the holding feet (18) for engaging behind the power busbars (9) and said slots lie opposite said holding feet.

3. The contact protection system according to claim 1 or 2,
wherein the contacting slots (3) of the contact protection modules (2) are embodied in such a manner that they provide a uniform division of all the mutually latched contact protection modules (2).

4. The contact protection system according to any one of the preceding claims 1 to 3,
wherein the terminal receiving regions (6) of the contact protection modules (2) comprise roof-shaped inclined insertion devices (8) for inserting clamping brackets (15a, 15b) of the connecting terminals (7) that are provided so as to fixedly clamp the connecting terminal (7) to the power busbars (9).

5. The contact protection system according to any one of the preceding claims 1 to 4,
wherein the connecting terminals (7) are connected in each case to a switching device that draws electrical current from the power busbars (9).

6. The contact protection system according to any one of the preceding claims 1 to 5,
wherein the connecting terminal (7) comprises a contact plate (10) having contact lamellae (11) that are arranged parallel to one another and through contacting slots (3) of a contact protection module (2) electrically contact a power busbar located underneath.

7. The contact protection system according to claim 6,
wherein the contact plate (10) of the connecting terminal (7) is guided by means of two opposite-lying guiding grooves (14a, 14b) that are provided in the opposite-lying clamping brackets (15a, 15b) of the connecting terminal (7).

8. The contact protection system according to claim 6 or 7,
wherein the contact plate (10) of the connecting terminal (7) is pressed against the power busbar (9) by means of a screw (12) and resilient disc (13).

9. The contact protection system according to claim 8,
wherein a connecting rail (23) or a connecting plate (24) can be clamped between the resilient disc (13) and the contact plate (10) of the connecting terminal (7).

10. The contact protection system according to claim 9,
wherein at least one prism clamp (30) for a circular and sector-shaped conductor or a ribbon cable (25) is attached to the connecting plate (24).

11. The contact protection system according to any one of the claims 1 to 10,
wherein power busbar carrier covering modules (4) are provided so as to cover power busbar carriers, wherein the power busbar carrier cover modules (4) can be latched by means of latching elements to adjacent contact protection modules (2).

12. The contact protection system according to any one of the claims 1 to 11, wherein the contact protection modules (2) can be covered and/or closed using an additional completely closed cover.

13. The contact protection system for power busbars (9) according to any one of the preceding claims 1 to 12,
wherein each contact protection module (2) of the contact protection system (1) for each power busbar (9) that is to be covered comprises in each case multiple holding feet (18) for engaging behind the respective power busbar (9),
wherein a covering device can be fastened to adjacent chambers of the contact protection module (2) so as to increase the fault arc resistance.

14. The contact protection system according to any one of the preceding claims 1 to 13,
wherein the contact protection modules (2), the power busbar carrier cover modules (4) and the edge profiles (5) of the contact protection system (1) are embodied from an electrically-insulating, thermally stable and fire-retarding synthetic material.

## Revendications

1. Système de protection contre les contacts accidentels (1) pour plusieurs barres collectrices (9) disposées parallèlement en direction horizontale, comportant des modules (2) de protection contre les contacts accidentels, réalisés de manière plane, lesquels présentent respectivement des pieds de maintien (18) pour la prise par l'arrière des barres collectrice (9) et des éléments d'encliquetage pour l'encliquetage mutuel avec des modules (2) voisins de protection contre les contacts accidentels,
dans lequel les modules (2) de protection contre les contacts accidentels présentent respectivement pour chacune des barres collectrices (9) une zone de logement de borne (6) destinée au logement de bornes de connexion (7) qui sont ménagées pour la mise en contact électrique de la barre collectrice respective (9), dans lequel chaque module (2) de protection contre les contacts accidentels présente un nombre de zones de logement de borne (6) correspondant au nombre de barres collectrices (9), dans lequel les zones de logement de borne (6) présentent des fentes de mise en contact (3), protégées pour les contacts directs avec les doigts, disposées respectivement en parallèle pour la mise en contact électrique des barres collectrices (9) au moyen des bornes de connexion (7),
dans lequel les modules (2) de protection contre les contacts accidentels sont coulissants sur plusieurs barres collectrices (9) disposées parallèlement en direction horizontale, de manière à ce que les pieds de maintien (18) des modules (2) de protection contre les contacts accidentels aient prise par l'arrière des barres collectrices (9),
dans lequel un profilé de bord (5) est enfichable sur un bord inférieur des modules (2) de protection contre les contacts accidentels enfilés sur les barres collectrices (9) et encliquetés les uns avec les autres, lequel profilé de bord est encliquetable par adhérence de force avec des modules (4) de recouvrement de support de barre et empêche ainsi que les modules (2) de protection contre les contacts accidentels soient involontairement détachés des barres collectrices (9).

2. Système de protection contre les contacts accidentels selon la revendication 1,
dans lequel les fentes de mise en contact (3) des zones de logement de borne (6) au niveau des pieds de maintien (18) destinés à la prise par l'arrière des barres collectrices (9) sont disposées de manière opposée à ces pieds de maintien.

3. Système de protection contre les contacts accidentels selon la revendication 1 ou 2,
dans lequel les fentes de mise en contact (3) des modules (2) de protection contre les contacts accidentels sont réalisées de manière à procurer une répartition uniforme de tous les modules (2) de protection contre les contacts accidentels encliquetés entre eux.

4. Système de protection contre les contacts accidentels selon l'une quelconque des revendications précédentes 1 à 3,
dans lequel les zones de logement de borne (6) des modules (2) de protection contre les contacts accidentels présentent des dispositifs d'insertion (8) biseautés en forme de toit, destinés à insérer des étriers de serrage (15a, 15b) des bornes de connexion (7), lesquels sont ménagés pour le serrage des bornes de connexion (7) sur les barres collectrices (9).

5. Système de protection contre les contacts accidentels selon l'une quelconque des revendications précédentes 1 à 4,
dans lequel les bornes de connexion (7) sont respectivement reliées à un appareil de commutation qui est approvisionné en courant électrique par les barres collectrices (9).

6. Système de protection contre les contacts accidentels selon l'une quelconque des revendications précédentes 1 à 5,
dans lequel la borne de connexion (7) présente une plaque de contact (10) munie de lamelles de contact (11) disposées en parallèle, lesquelles, en traversant les fentes de mise en contact (3) d'un module (2) de protection contre les contacts accidentels, mettent en contact électrique une barre collectrice disposée en dessous.

7. Système de protection contre les contacts accidentels selon la revendication 6,
dans lequel la plaque de mise en contact (10) de la borne de connexion (7) est guidée par deux rainures de guidage (14a, 14b) opposées, lesquelles sont ménagées dans des étriers de serrage (15a, 15b) opposés de la borne de connexion (7).

8. Système de protection contre les contacts accidentels selon la revendication 6 ou 7,
dans lequel la plaque de contact (10) de la borne de connexion (7) est pressée contre la barre collectrice (9) au moyen d'une vis (12) et d'une rondelle élastique (13).

9. Système de protection contre les contacts accidentels selon la revendication 8,
dans lequel un rail de liaison (23) ou une plaque de raccordement (24) peut être serré(e) entre la rondelle élastique (13) et la plaque de contact (10) de la borne de connexion (7).

10. Système de protection contre les contacts accidentels selon la revendication 9,
dans lequel au moins une borne à prisme (30) est montée sur la plaque de raccordement (24) pour un câble rond et secteur ou un câble plat (25).

11. Système de protection contre les contacts accidentels selon l'une quelconque des revendications 1 à 10,
dans lequel des modules (4) de recouvrement de support de barre sont ménagés pour recouvrir des supports de barres collectrices, dans lequel les modules (4) de recouvrement de support de barre sont encliquetables avec des modules (2) voisins de protection contre les contacts accidentels au moyen d'éléments d'encliquetage.

12. Système de protection contre les contacts accidentels selon l'une quelconque des revendications 1 à 11,
dans lequel les modules (2) de protection contre les contacts accidentels peuvent être recouverts et/ou fermés par un recouvrement supplémentaire complètement fermé.

13. Système de protection contre les contacts accidentels pour barres collectrices (9) selon l'une quelconque des revendications précédentes 1 à 12,
dans lequel chaque module (2) de protection contre les contacts accidentels du système de protection contre les contacts accidentels (1) présente pour chaque barre collectrice (9) à recouvrir respectivement plusieurs pieds de maintien (18) pour la prise par l'arrière de la barre collectrice (9) respective,
dans lequel un dispositif de recouvrement peut être fixé sur des chambres voisines des modules (2) de protection contre les contacts accidentels pour augmenter la résistance à l'arc parasite.

14. Système de protection contre les contacts accidentels selon l'une quelconque des revendications précédentes 1 à 13,
dans lequel les modules (2) de protection contre les contacts accidentels, les modules (4) de recouvrement de support de barre et les profilés de bord (5) du système de protection contre les contacts accidentels (1) sont constitués d'une matière plastique électriquement isolante, thermiquement stable et ignifuge.
